# DEMANDE DE BREVET EUROPEEN

(11) **EP 0 873 842 A2**
(43) Date de publication de la demande: **28.10.1998**
(21) Numéro de dépôt: 98103126.3
(22) Date de dépôt: 22.01.1997
(51) Int. Cl.: B29C 45/44

(54) **Moule pour former des bouchons à languettes retournées ainsi que bouchon formé dans un tel moule**

(30) Priorité: 26.01.1996 FR 9601189
(62) Demande divisionnaire de: 97901144.2
(71) Demandeur: ASTRA PLASTIQUE, 69830 Saint Georges de Reneins (FR)
(72) Inventeur: Champagnon, Pascal, 69220 Saint Jean D'Ardieres (FR); Benoît-Gonin, Claude, 69460 Odenas (FR)
(74) Mandataire: Hepp, Dieter

(57) **Abrégé**

Ce moule est destiné à former un bouchon (1) comportant une jupe cylindrique (3) munie d'au moins un filet de vissage (4),un fond (2) et une bague d'inviolabilité (6) reliée à l'extrémité libre de la jupe par des pontets ruptibles. Il présente une partie au fond de moule (20), une partie dévêtisseuse ou bague dévêtrice (21) et un noyau (22) destiné à être retiré par un mouvement de translation, sans rotation.

Au cours du démoulage, les languettes sont retournées de telle sorte qu'elles soient presque parallèles à la jupe et à la bague d'inviolabilité et orientées vers le fond du bouchon. Pour mettre les languettes dans la position voulue, la bague d'inviolabilité, et le bouchon qui lui est solidaire, sont rapprochés du noyau, de telle sorte que les languettes soient repliées vers l'intérieur du bouchon par le noyau du moule.

## Description

La présente invention a pour objet un procédé et un moule pour réaliser des bouchons inviolables à languettes retournées en une seule phase.

Une solution pour rendre inviolable un bouchon à vis comportant un fond et une jupe filetée est de munir la jupe filetée, sur son bord libre opposé au fond du bouchon, d'une bague d'inviolabilité. Cette dernière comporte des languettes retournées vers le fond du bouchon et coopérant avec une nervure annulaire réalisée sur une bouteille destinée à recevoir le bouchon. La bague d'inviolabilité est reliée à la jupe par des pontets ruptibles. Ainsi, lors de la première ouverture de la bouteille, lorsque le bouchon est dévissé pour la première fois, les languettes viennent en butée contre la nervure annulaire de la bouteille, empêchant ainsi de suivre le bouchon dans son mouvement de translation. Les pontets ruptibles sont alors rompus. Cette rupture irréversible permet de visualiser que la bouteille a déjà été ouverte au moins une fois.

Le brevet français FR-2 525 565 décrit un bouchon de ce type.

Pour réaliser un tel bouchon, il est connu d'utiliser un moule en trois parties : une partie ou fond de moule épousant la forme extérieure du bouchon sans la bague d'inviolabilité, une partie dévêtisseuse ou bague dévêtrice épousant la forme extérieure de la bague d'inviolabilité et un noyau de moule épousant la forme intérieure du bouchon et de la bague d'inviolabilité .

Avec un tel moule, il est possible de retirer le bouchon du moule sans dévissage, en éloignant la partie formant le fond et la bague dévêtrice du noyau par translation. Lors du démoulage, les languettes sont entraînées dans une position radiale, orientée vers l'intérieur de la bague d'inviolabilité. Cette position est indésirable. Le but de l'invention est alors de mettre à disposition un procédé et un moule pour démouler un bouchon inviolable qui ne comporte pas cet inconvénient. Selon la présente invention, les languettes sont retournées de telle sorte qu'elles soient presque parallèles à la jupe et à la bague d'inviolabilité et orientées vers le fond du bouchon. Pour mettre les languettes dans la position voulue, la bague d'inviolabilité, et le bouchon qui lui est solidaire, sont rapprochés du noyau, de telle sorte que les languettes soient repliées vers l'intérieur du bouchon par le noyau du moule.

Lors de cette opération de repliage des languettes, l'ensemble formé par le bouchon et la bague d'inviolabilité n'est maintenu que par la bague dévêtrice, au niveau de la bague d'inviolabilité. En effet, la partie du moule doit être retirée au début de l'opération de démoulage pour permettre la déformation du bouchon lorsqu'il est retiré en translation du noyau.

Le moule selon l'invention est du type moule pour former un bouchon comportant une jupe cylindrique munie d'au moins un filet de vissage et obturée à une extrémité par un fond ainsi qu'une bague d'inviolabilité reliée à l'extrémité libre de la jupe par des pontets ruptibles, la bague d'inviolabilité comportant des languettes destinées à coopérer avec une nervure annulaire située sur le col d'un récipient destiné à recevoir le bouchon, présentant une partie mobile ou fond de moule dont la paroi intérieure correspond à la surface extérieure de la jupe et du fond, une partie dévêtisseuse ou bague dévêtrice dont la surface interne correspond à la surface extérieure de la bague d'inviolabilité et un noyau destiné à être retiré par un mouvement de translation, sans rotation, et dont la surface extérieure correspond à la surface intérieure du fond, de la jupe et de la bague d'inviolabilité .

De toute façon, l'invention sera bien comprise à l'aide de la description qui suit, en référence au dessin schématique annexe, représentant à titre d'exemples non limitatifs deux formes d'exécution d'un moule selon l'invention, ainsi qu'un bouchon réalisé à l'aide de l'un ces moules.
Figures 1 à 3 représentent en coupe un moule selon l'invention au cours de différentes étapes du démoulage ;
Figure 4 est une vue du détail A de la figure 1 à échelle agrandie ;
Figure 5 est une vue du détail B de la figure 3 à échelle agrandie ;
Figure 6 représente en perspective à échelle agrandie un bouchon selon l'invention.

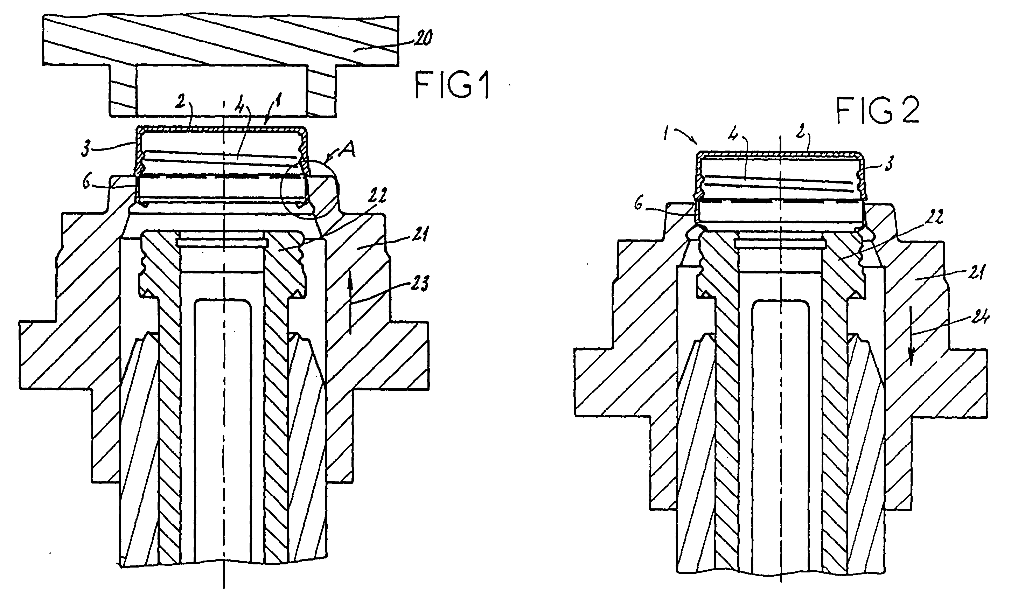

Les figures 1 à 3 et 6 montrent un bouchon 1 qui a été réalisé dans un moule selon l'invention tel que représenté aux figures 1 à 3.

Ce bouchon 1 comporte, de façon connue en soi, un fond 2 prolongé par une jupe 3 présentant un filetage intérieur, formé de trois filets 4. La jupe 3 est reliée, à son extrémité libre, par une pluralité de pontets 5, régulièrement répartis sur sa périphérie, à une bague d'inviolabilité 6. Ces pontets sont ruptibles sous l'effet d'une certaine contrainte. Ce bouchon 1 est destiné à équiper un récipient dont le col comporte un filetage présentant trois nervures extérieures, ainsi qu'une nervure annulaire disposée en-dessous du filetage extérieur.

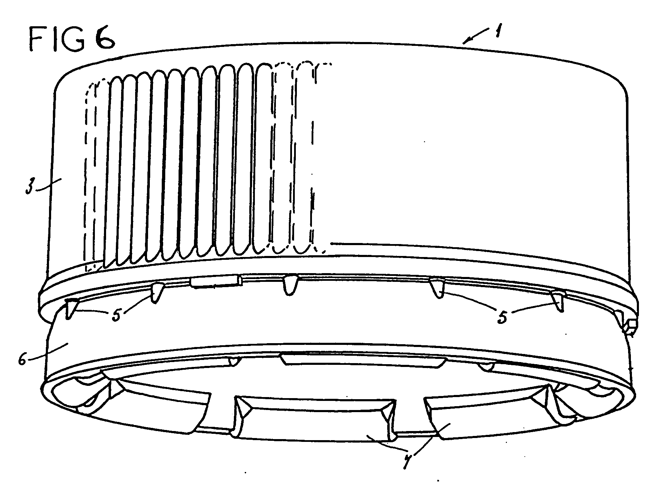

La bague d'inviolabilité 6 présente plusieurs languettes 7 régulièrement réparties. La liaison entre la bague et chaque languette est réalisée par une zone amincie de matière 8 formant une charnière-film, permettant le pliage de la languette vers l'intérieur. Sur les figures 5 et 6, les languettes 10 sont représentées dans leur position finale, telle qu'elles se trouvent sur le col du récipient. Elles sont repliées vers le fond 2 du bouchon et sont sensiblement parallèles à la paroi de la bague d'inviolabilité 6 et à la jupe 3.

Ces languettes 7 sont destinées à coopérer avec la nervure annulaire du col du récipient lors du premier dévissage du bouchon 1. Lors de ce premier dévissage, les languettes viennent buter contre la nervure annulaire avant le dévissage complet, empêchant ainsi la bague d'inviolabilité de passer au-delà de cette nervure. En continuant d'exercer un couple de dévissage sur la jupe 3, les pontets ruptibles 5 cèdent. La bague 6 reste alors en-dessous de la nervure annulaire et la jupe 3 peut être dévissée, permettant l'accès au contenu du récipient.

Les figures 1 à 3 montrent en coupe un moule pour réaliser un bouchon tel que celui décrit ci-dessus. Ce moule comporte trois parties essentielles : une première partie désignée par fond de moule 20, une seconde partie appelée partie dévêtisseuse ou bague dévêtrice 21 et une troisième partie constituant le noyau 22 du moule.

La surface intérieure du fond du moule 20 correspond à la surface extérieure de la jupe 3 et du fond 2. La surface interne de la bague dévêtrice correspond à la surface extérieure de la bague d'inviolabilité 6. Enfin, le noyau 22 donne sa forme à la surface intérieure du bouchon, c'est-à-dire du fond 2, de la jupe 3 et de la bague d'inviolabilité 6.

Sur la figure 1, le bouchon 1 a déjà été moulé et le moule est ouvert. Pour ouvrir le moule, on retire tout d'abord la partie formant le fond 20. Puis la bague dévêtrice 21 est déplacée dans le sens de la flèche 23 de la figure 1. Le noyau 22 reste immobile.

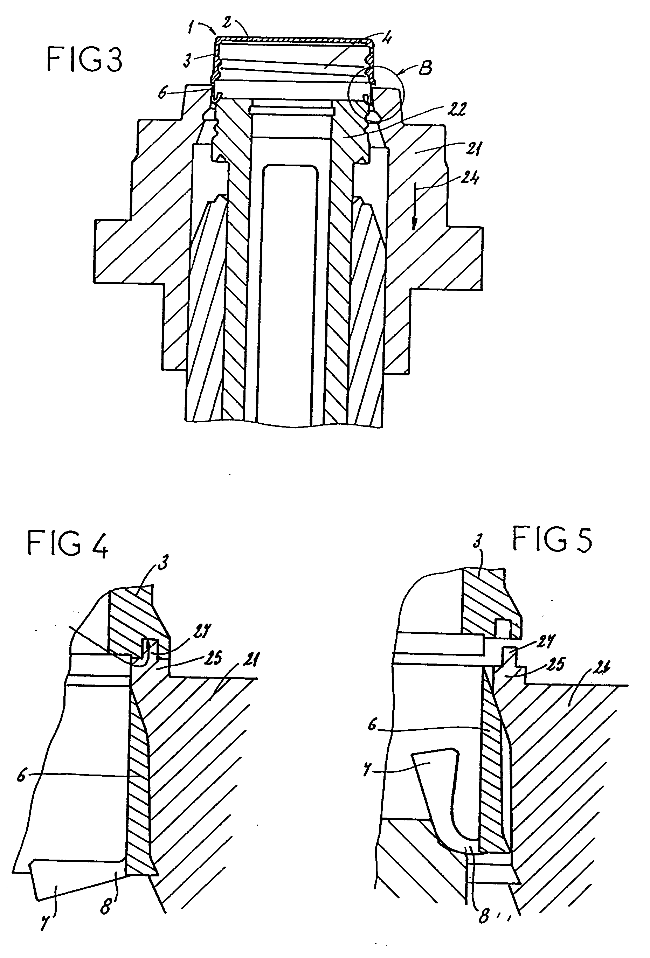

Le noyau 22 est retiré par un mouvement de translation de la bague dévêtrice 21, sans dévissage. Au cours de cette étape, la jupe 3 se déforme. C'est pour permettre une libre déformation de la jupe 3 que la partie formant le fond 20 du moule est retirée avant le retrait du noyau. Les languettes 7 de la bague d'inviolabilité 6 sont entraînées par le noyau 22 et se retrouvent en position sensiblement radiale, comme représenté sur la figure 4.

Pour replier les languettes 7 et les mettre dans une position où elles sont sensiblement parallèles à la jupe 3 et à la bague d'inviolabilité 6 (figures 5 et 6), la bague dévêtrice 21 est munie d'un mouvement de translation dans le sens de la flèche 24 des figures 2 et 3, de telle sorte que les languettes 7 se rapprochent du noyau 22. La figure 2 illustre le moment où les languettes 7 viennent au contact du noyau 22 et les figures 3 et 5 montrent le noyau 22 repliant les languettes 7 ainsi que l'éjection du bouchon hors du moule.

La forme du bouchon peut être différente. Le fond du bouchon peut par exemple présenter une jupe destinée à venir à l'intérieur du col du récipient pour parfaire l'étanchéité. La forme des languettes peut également être différente de celle représentée au dessin.

## Revendications

1. Procédé pour démouler un bouchon inviolable à languettes retournées, formé dans un moule comportant une première partie (20) formant le fond du moule, une deuxième partie constituant une bague dévêtrice (21) et une troisième partie constituant un noyau (22) du moule,
caractérisé par les pas suivants:
- séparer la partie formant le fond du moule (20) du bouchon par translation
- déplacer la bague dévêtrice par rapport au noyau (22) par translation
- séparer le noyau (22) du bouchon par translation
- replier les languettes en une position dirigée vers le fond du bouchon par action du noyau (22).

2. Procédé selon la revendication 1, caractérisé en ce que le bouchon est éjecté hors du moule par action du noyau après le repliage des languettes.
